# EUROPEAN PATENT SPECIFICATION

(11) **EP 1 859 964 B1**
(45) Date of publication and mention of the grant of the patent: **11.05.2011**
(21) Application number: 06713768.7
(22) Date of filing: 15.02.2006
(51) Int. Cl.: B60C 17/00, B60C 9/04, B60C 13/00

(54) **PNEUMATIC TIRE**
LUFTREIFEN
BANDE PNEUMATIQUE

(30) Priority: 15.03.2005 JP 2005072640
(43) Date of publication of application: 28.11.2007
(73) Proprietor: Bridgestone Corporation, Tokyo 104-8340 (JP)
(72) Inventor: SHIRAISHI, Humihiro, -1, Ogawahigashi-cho, Kodaira-shi, Tokyo (JP); HATTORI, Kenichi, -1, Ogawahigashi-cho, Kodaira-shi, Tokyo (JP); KUSANO, Tomohiro, -1, Ogawahigashi-cho, Kodaira-shi, Tokyo (JP)
(74) Representative: Whalley, Kevin
(86) International application number: PCT/JP2006/302627
(87) International publication number: WO 2006/098110

(56) References cited:
- JP-A- 05 294 101
- JP-A- 11 310 018
- JP-A- 2002 301 911
- JP-A- 2004 249 873
- JP-A- 2004 306 657

## Description

This invention relates to a pneumatic tire, and more particularly to a run-flat tire of a side reinforcing type capable of safely running even after a puncture.

Heretofore, as a tire capable of safely running over a certain distance without losing its load supporting ability even at a condition that the inner pressure of one tire has dropped due to a puncture or the like or so-called run-flat tire, there is known a run-flat tire of a side reinforcing type wherein a side reinforcing rubber layer having a crescent shape in section is disposed at an inside of a carcass in a sidewall portion of the tire to improve one stiffness of the sidewall portion.

However, during the running at the condition that the inner pressure of the tire has dropped or so-called run-flat running, there is a risk that as the deformation of the sidewall portion of the tire becomes large, the deformation of the side reinforcing rubber layer becomes also large, and as a result heat generation of the side reinforcing rubber layer proceeds and the side reinforcing rubber layer exceeds its breaking limit and thereby the tire has a breakdown.

As a means for delaying one time when such a breakdown is caused, there is known a method wherein the bending of the sidewall portion of the tire during the run-flat running is controlled to suppress the heat generation of the rubber by increasing one elastic modulus of a rubber composition constituting the side reinforcing rubber layer and a bead filler disposed on a bead core of a bead portion outward in a radial direction of the tire.

Also, JP-A-2002-144827 discloses a tire wherein ride comfort during the normal running is sufficiently maintained while improving the durability of the tire during the run-flat running by
applying to the sidewall portion a rubber composition having a function of suppressing the deterioration of the elastic modulus at a high temperature or a rubber composition having such a property that the elastic modulus is low at a low temperature but considerably increases at a high temperature.

Moreover, JP-A-2004-249888 discloses a tire wherein breakage due to a local temperature rise in the side reinforcing rubber layer and/or sidewall portion is prevented to improve the run-flat durability of the tire by applying to the side reinforcing rubber layer and/or sidewall portion a fine carbon fiber-containing rubber composition having an excellent thermal conduction.

Attention is also drawn to one disclosure of JP-2004 -249873 A, which discloses the features of the preamble of claim 1.

Among the run-flat tires of the side reinforcing type, however, tires having a high aspect ratio or being used under a high load condition cannot sufficiently suppress the heat generation at the side reinforcing rubber layer and hence they can not sufficiently ensure the run-flat durability of the tire under the present situation.

It is, therefore, an object of the invention to solve the above-mentioned problems of the conventional techniques and to provide a pneumatic tire having a small heat generation during the run-flat running and a high run-flat durability.

The inventors have made various studies in order to achieve the above object and discovered that in a pneumatic tire comprising a side reinforcing rubber layer inside a carcass at a sidewall portion, the run-flat durability of the tire can be improved by defining a loss tangent (tan δ) at 25°C and 1% strain of a rubber composition applied to a coating rubber of the carcass and optionally also the sidewall portion to be not higher than a specified value to suppress the heat generation as a whole of the tire during the run-flat running, and as a result the invention has been accomplished.

That is, the pneumatic tire according to the invention comprises a pair of bead portions, a pair of sidewall portions, a tread portion continuing to both the sidewall portions, a carcass composed of one or more carcass plies toroidally extending between the pair of bead portions and reinforcing these portions, and a pair of side reinforcing rubber layers each disposed at an inside of the carcass in the sidewall portion, wherein the carcass ply is formed by covering reinforcing cords with a coating rubber and a rubber composition having a loss tangent (tan δ) at 25°C and 1% strain of not higher than 0.12 is applied to the coating rubber.

In a preferable embodiment of the pneumatic tire according to the invention, the rubber composition applied to the coating rubber has a dynamic elastic modulus (E') at 25°C and 1% strain of not lower than 8.0 MPa. In this case, since the heat generation of the tire is small and further the stiffness of the carcass ply is high, the bending of the tire during the run-flat running can be suppressed to further improve the run-flat durability of the tire.

In the pneumatic tire according to the invention comprising the pair of bead portions, the pair of sidewall portions, the tread portion continuing to both the sidewall portions, the carcass composed of one or more carcass plies toroidally extending between the pair of bead portions and reinforcing these portions and the pair of side reinforcing rubber layers each disposed at the inside of the carcass in the sidewall portion, wherein the carcass ply is formed by covering reinforcing cords with a coating rubber and a rubber composition having a loss tangent (tan δ) at 25°C and 1% strain of not higher than 0.12 is applied to the coating rubber, it is preferable that a rubber composition having a loss tangent (tan δ) at 25°C and 1% strain of not higher than 0.15 is applied to the sidewall portion. Moreover, it is more preferable that the rubber composition applied to the coating rubber has a dynamic elastic modulus (E') at 25°C and 1% strain of not lower than 8.0 MPa.

In another preferable embodiment of the pneumatic tire according to the invention, the rubber composition applied to the coating rubber and/or the rubber composition applied to the sidewall portion is formed by compounding carbon black having a grade of not higher than FEF into a rubber component.

According to the invention, there can be provided a pneumatic tire comprising a side reinforcing rubber layer inside a carcass at a sidewall portion and having an excellent run-flat durability, wherein a rubber composition applied to the coating rubber of the carcass and optionally also the sidewall portion has a loss tangent (tan δ) at 25°C and 1% strain of not higher than a specified value and the heat generation as a whole of the tire during the run-flat running is small.

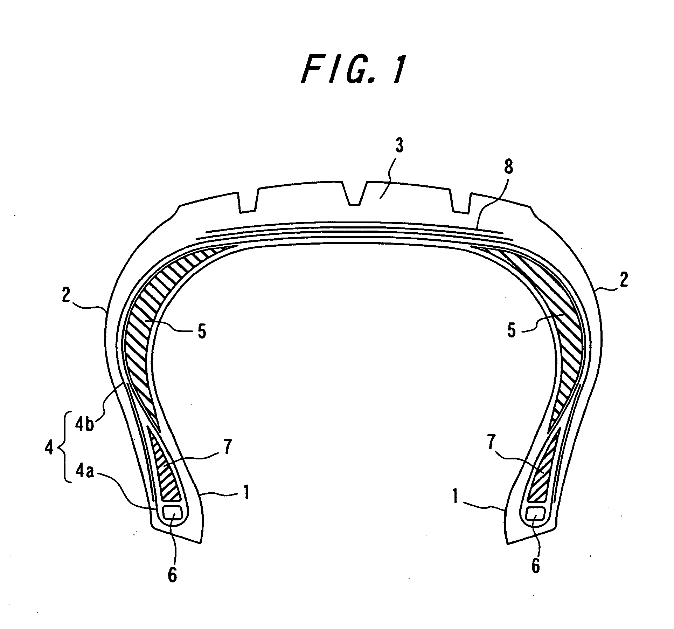

The invention will be described in detail below with reference to the accompanying drawing, wherein FIG. 1 is a sectional view of an embodiment of the pneumatic radial tire according to the invention. The tire shown in FIG. 1 comprises a pair of right and left bead portions 1, a pair of sidewall portions 2, a tread portion 3 continuing to both of the sidewall portions 2, a radial carcass 4 composed of one or more carcass plies toroidally extending between the pair of bead portions 1 and reinforcing these portions 1, 2, 3, and a pair of side reinforcing rubber layers 5 each disposed at the inside of the carcass 4 in the sidewall portion 2. The side reinforcing rubber layer 5 of the tire shown in the figure has substantially a crescent shape in section, but the shape of the side reinforcing rubber layer 5 in the pneumatic tire according to the invention is not limited thereto. Moreover, the maximum thickness of the side reinforcing rubber layer 5 is not particularly limited but is preferably within a range of 6 to 13 mm.

In the illustrated tire, a bead filler 7 is disposed on an outside of a ring-shaped bead core 6 embedded in the respective bead portion 1 in the radial direction of the tire and further a belt 8 composed of two belt layers is disposed on an outside of a crown portion of the radial carcass 4 in the radial direction of the tire. The belt layer is commonly composed of a rubberized layer containing cords slantly extending with respect to an equatorial plane of the tire, preferably a rubberized steel cord layer. Further, the belt 8 is constituted by stacking the two belt layers so as to cross the cords constituting the belt layers with each other with respect to the equatorial plane of the tire. Although the belt 8 of the illustrated tire is composed of two belt layers, the number of belt layers constituting the belt 8 is not limited thereto in the pneumatic tire according to the invention.

The radial carcass 4 in the illustrated tire is composed of a turn-up carcass ply 4a and a down carcass ply 4b, and both end portions of the turn-up carcass ply 4a are wound around the bead cores 6 to form turn-up portions. However, the structure and the ply number of the radial carcass 4 are not limited thereto. The carcass plies constituting the radial carcass 4, i.e. the turn-up carcass ply 4a and down carcass ply 4b in the illustrated embodiment are commonly formed by covering plural reinforcing cords arranged in parallel with a coating rubber. As the reinforcing cord are used organic fiber cords such as a cellulose-based fiber cord, e.g. rayon, a polyester-based fiber cord, e.g. polyethylene terephthalate, a steel cord and the like.

HAF grade carbon black having a high reinforcing property is commonly applied to the coating rubber for the carcass ply of the radial tire in order to ensure the durability. Since the radial tire is large in the bending of the sidewall portion as compared with a bias tire due to its structure, the coating rubber at the sidewall portion is easily broken by fatigue. Moreover, since the turn-up end is existent in the radial carcass, breakage of the coating rubber from the end of the ply is easily caused. Therefore, HAF grade carbon black hardly causing breakage is applied to the coating rubber for the carcass ply of the radial tire. On the other hand, since the side reinforcing rubber layer which does not exist in the normal tire is disposed in the run-flat tire as the invention, the bending of the sidewall portion is suppressed, and it is unnecessary to consider the durability as described above as compared with the normal tire. Instead, the durability during the run-flat running is important, because the tire is run under an extremely large deformation at a state of no inner pressure. Under such a situation, there is substantially no effect when the coating rubber of the carcass ply and side rubber are hardly broken, and it is discovered in the invention that it is effective to use a coating rubber or side rubber hardly generating heat (having a low heat buildup) even if the fracture resistance is sacrificed.

Therefore, a rubber composition having a loss tangent (tan δ) at 25°C and 1% strain of not higher than 0.12 is applied to the coating rubber for the carcass ply constituting the radial carcass 4. Since the rubber composition having a loss tangent (tan δ) at 25°C and 1% strain of not higher than 0.12 is excellent in respect of low heat buildup, the heat generation during the run-flat running is small, so that the heat generation of the carcass ply and hence the heat generation of the tire as a whole can be suppressed. Thus, the temperature rise of the side reinforcing rubber layer 5 during the run-flat running can be controlled to suppress the destruction of the side reinforcing rubber layer 5 to thereby improve the run-flat durability of the tire by applying to the coating rubber of the carcass ply the rubber composition having a loss tangent (tan δ) at 25°C and 1% strain of not higher than 0.12. When the carcass is composed of plural carcass plies as in the illustrated radial carcass 4, it is preferable that the rubber composition having a loss tangent (tan δ) at 25°C and 1% strain of not higher than 0.12 is applied to the coating rubber of at least the carcass ply adjacent to the side reinforcing rubber layer 5 (the turn-up carcass ply 4a in the illustrated embodiment).

Also, the rubber composition applied to the coating rubber of the carcass ply preferably has a dynamic elastic modulus (E') at 25°C and 1% strain of not lower than 8.0 MPa. In this case, the carcass ply has high stiffness, so that the bending of the tire can be suppressed during the run-flat running to further improve the run-flat durability of the tire.

In the pneumatic tire according to the invention, it is preferable that a rubber composition having a loss tangent (tan δ) at 25°C and 1% strain of not higher than 0.15 is applied to the sidewall portion 2. Since the rubber composition having a loss tangent (tan δ) at 25°C and 1% strain of not higher than 0.15 is excellent in respect of low heat buildup, the heat generation during the run-flat running is small, so that the heat generation of the sidewall portion 2 and hence the heat generation of the tire as a whole can be suppressed. Thus, the temperature rise of the side reinforcing rubber layer 5 during the run-flat running can be controlled to suppress the destruction of the side reinforcing rubber layer 5 to thereby improve the run-flat durability of the tire by applying to the sidewall portion 2 the rubber composition having a loss tangent (tan δ) at 25°C and 1% strain of not higher than 0.15.

In the pneumatic tire according to the invention, it is required that the rubber composition having a loss tangent (tan δ) at 25°C and 1% strain of not higher than 0.12 is applied to the coating rubber for the carcass ply and optionally also the rubber composition having a loss tangent (tan δ) at 25°C and 1% strain of not higher than 0.15 is applied to the sidewall portion 2, but it is more preferable that the rubber composition having a loss tangent (tan δ) at 25°C and 1% strain of not higher than 0.15 is applied to the sidewall portion 2 while the rubber composition having a loss tangent (tan δ) at 25°C and 1% strain of not higher than 0.12 is applied to the coating rubber for the carcass ply. In the latter case, the heat generations in both the carcass ply and the sidewall portion 2 during the run-flat running are small, so that the heat generation of the tire as a whole can be considerably decreased. As a result, the temperature rise of the side reinforcing rubber layer 5 during the run-flat running can be surely controlled to highly improve the run-flat durability of the tire.

The rubber composition applied to the coating rubber is preferable a rubber composition formed by compounding low grade carbon black having a grade of not higher than FEF into a rubber component. In general, high grade carbon black is commonly used in the coating rubber for the carcass ply in order to improve the reinforcing property of the carcass, but it is preferable in the invention that low grade carbon black having a grade of not higher than FEF is used for improving the low heat buildup. Similarly, it is preferable that low grade carbon black having a grade of not higher than FEF is used for the sidewall portion 2 in order to make the heat buildup thereof low. Moreover, the workability in the milling of the rubber composition can be also improved by using the carbon black having a grade of not higher than FEF. As the carbon black having a grade of not higher than FEF are mentioned GPF and SRF grade carbon blacks and the like in addition to the FEF grade carbon black.

As the rubber component of the rubber composition are mentioned diene-based synthetic rubbers such as styrene-butadiene copolymer rubber (SBR), polybutadiene rubber (BR), polyisoprene rubber (IR) and the like in addition to natural rubber (NR). These rubber components may be used alone or in a blend of two or more.

In the rubber composition can be properly compounded additives usually used in the rubber industry such as a softener, an antioxidant, a vulcanizing agent, a vulcanization aid, a vulcanization accelerator and the like within amounts not damaging the object of the invention in addition to the above carbon black having a grade of not higher than FEF and the rubber component. As these additives can be preferably used commercially available ones. Moreover, the rubber composition can be produced by compounding the rubber component with the carbon black having a grade of not higher than FEF and, if necessary, the properly selected additives and milling, warming, extruding and so on.

The pneumatic tire of the invention can be produced by applying the rubber composition having the above-mentioned properties to the coating rubber for the carcass ply and optionally also the sidewall portion 2 and according to the usual method. As a gas filled into the pneumatic tire of the invention can be used air or air having a regulated partial oxygen pressure but also an inert gas such as nitrogen or the like.

The following examples are given in illustration of the invention and are not intended as limitations thereof.

A rubber composition for the coating rubber of the carcass ply having a compounding recipe as shown in Table 1, a rubber composition for the sidewall having a compounding recipe as shown in Table 2 and a rubber composition for the side reinforcing rubber layer having a compounding recipe as shown in Table 3 are prepared according to the usual method, respectively. Moreover, the loss tangent (tan δ) and dynamic elastic modulus (E') of the resulting rubber composition are measured according to the following methods. Results are shown in Table 1.

### (1) Loss tangent (tan δ) and Dynamic elastic modulus (E')

A sheet having a width of 5 mm and a length of 40 mm as a sample is cut out from a slab sheet having a thickness of 2 mm obtained by vulcanizing each of the above rubber compositions at 160°C for 12 minutes. With respect to the sample, the loss tangent (tan δ) and dynamic elastic modulus (E') of the rubber composition are measured by a spectrometer manufactured by Ueshima Seisakusho Co., Ltd. under a condition that a distance between chucks is 10 mm, an initial strain is 200 µm, a dynamic strain is 1%, a frequency is 52 Hz and a temperature is 25°C.

**Table 1**

| For the coating rubber | | Rubber composition A | Rubber composition B | Rubber composition C |
|---|---|---|---|---|
| NR | parts by mass | 80 | 70 | 100 |
| SBR *1 | | 20 | 30 | - |
| Carbon black (HAF) | | 40 | - | - |
| Carbon black (FEF) | | - | - | 50 |
| Carbon black (GPF) | | - | 40 | - |
| Stearic acid | | 1 | 1 | 3 |
| Antioxidant *2 | | 1 | 1 | 1.5 |
| Zinc white | | 4 | 4 | 10 |
| Sulfur | | 2.5 | 2.5 | 4 |
| Dynamic elastic modulus (E') | MPa | 6.5 | 4.2 | 9.5 |
| Loss tangent (tan δ) | - | 0.15 | 0.09 | 0.10 |

**Table 2**

| For the sidewall | | Rubber composition D | Rubber composition E |
|---|---|---|---|
| NR | parts by mass | 40 | 40 |
| BR *3 | | 60 | 60 |
| Carbon black (FEF) | | 50 | 30 |
| Stearic acid | | 2 | 2 |
| Antioxidant *2 | | 3 | 3 |
| Zinc white | | 3 | 6 |
| Sulfur | | 1.5 | 1.8 |
| Dynamic elastic modulus (E') | MPa | 5.3 | 3.5 |
| Loss tangent (tan δ) | - | 0.20 | 0.12 |

**Table 3**

| For the side reinforcing rubber layer | | Rubber composition F |
|---|---|---|
| NR | parts by mass | 30 |
| BR*3 | | 70 |
| Carbon black (FEF) | | 50 |
| Stearic acid | | 1 |
| Zinc white | | 5 |
| Sulfur | | 6 |
| Dynamic elastic modulus (E') | MPa | 12.5 |
| Loss tangent (tan δ) | - | 0.09 |

| | | |
|---|---|---|
| *1 SBR: SBR1778 manufactured by JSR Corporation, styrene-butadiene copolymer containing 25% of styrene. *2 Antioxidant: 6PPD manufactured by Ouchishinko Chemical Industrial Co., Ltd. *3 BR: BR01 manufactured by JSR Corporation, high-cis butadiene polymer. | | |

Then, there is prepared a run-flat tire having a structure shown in Table 1 and a tire size of 225/60R17 by using the rubber compositions A-C for the coating rubber, the rubber compositions D-E for the sidewall and the rubber composition F for the side reinforcing rubber layer. Combinations of the rubber compositions A-C for the coating rubber and the rubber compositions D-E for the sidewall in the test tire are shown in Table 4. With respect to the resulting tire, the run-flat durability and the temperature inside the tire during the run-flat running are then measured according to the following methods. Results are shown in Table 4.

### (2) Run-flat durability

Each test tire is assembled onto a rim at a normal pressure, inflated at an inner pressure of 230 kPa and left in a room at 38°C for 24 hours and then the inner pressure is caused to be an atmospheric pressure by pulling out a core of a valve and a drum running test is conducted under a condition that a load is 9.8 kN (1000 kg), speed is 90 km/h and a temperature is 40°C. The running distance until damage is caused in this case is measured, which is shown by an index on the basis that the running distance until the damage is caused in the tire of the Comparative Example 1 is 100. The larger the index value, the longer the running distance until the damage is caused and the better the run-flat durability.

### (3) Temperature inside the tire

The drum running test is conducted according to the above method, and the temperature inside the side reinforcing rubber layer is measured by a contact-type thermometer after 10 minutes from the start of the running.

**Table 4**

| | Comparative Example 1 | Example 1 | Example 2 | Example 3 | Example 4 |
|---|---|---|---|---|---|
| Kind of the rubber composition for the coating rubber | Rubber composition A | Rubber composition B | Rubber composition C | Rubber composition A | Rubber composition C |
| Kind of the rubber composition for the sidewall | Rubber composition D | Rubber composition D | Rubber composition D | Rubber composition E | Rubber composition E |
| Temperature inside the tire (°C) | 110 | 90 | 85 | 105 | 80 |
| Run-flat durability (index) | 100 | 120 | 140 | 110 | 155 |

As seen from the results of Examples 1 and 2, the temperature rise inside the tire during the run-flat running can be controlled to improve the run-flat durability of the tire by applying to the coating rubber for the carcass ply the rubber composition having a loss tangent (tan δ) at 25°C and 1% strain of not higher than 0.12.

Also, as seen from the results of Example 3, the temperature rise inside the tire during the run-flat running can be controlled to improve the run-flat durability of the tire by applying to the sidewall portion the rubber composition having a loss tangent (tan δ) at 25 °C and 1% strain of not higher than 0.15. It is noted that Example 3 is outside the scope of the invention claimed.

Moreover, as seen from the results of Example 4, the temperature rise inside the tire during the run-flat running can be further controlled to highly improve the run-flat durability of the tire by applying to the sidewall portion the rubber composition having a loss tangent (tan δ) at 25°C and 1% strain of not higher than 0.15 while applying to the coating rubber for the carcass ply the rubber composition having a loss tangent (tan δ) at 25°C and 1% strain of not higher than 0.12.

As seen from the above results, the temperature rise inside the tire during the run-flat running can be controlled to improve the run-flat durability of the tire by applying to at least one of the coating rubber for the carcass ply and optionally also the sidewall portion the rubber composition having a loss tangent (tan δ) at 25°C and 1% strain of not higher than the specified value, to obtain low heat buildup.

## Claims

1. A pneumatic tire comprising a pair of bead portions (1), a pair of sidewall portions (2), a tread portion (3) continuing to both the sidewall portions, a carcass (4) composed of one or more carcass plies toroidally extending between the pair of bead portions and reinforcing these portions, and a pair of side reinforcing rubber layers (5) each disposed at an inside of the carcass in the sidewall portion, **characterised in that** the carcass ply is formed by covering reinforcing cords with a coating rubber and a rubber composition having a loss tangent (tan δ) at 25°C and 1% strain of not higher than 0.12 is applied to the coating rubber.

2. A pneumatic tire as claimed in claim 1, wherein the rubber composition applied to the coating rubber has a dynamic elastic modulus (E') at 25°C and 1% strain of not lower than 8.0 MPa.

3. A pneumatic tire as claimed in claim 1 or 2, wherein a rubber composition having a loss tangent (tan δ) at 25°C and 1% strain of not higher than 0.15 is applied to the sidewall portion (2).

4. A pneumatic tire as claimed in any of claims 1 to 3, wherein the rubber composition applied to the coating rubber and optionally also the rubber composition applied to the sidewall portion is formed by compounding carbon black having a grade of not higher than FEF into a rubber component.

## Patentansprüche

1. Luftreifen, der ein Paar von Wulstabschnitten (1), ein Paar von Seitenwandabschnitten (2), einen Laufflächenabschnitt (3), der sich bis zu den beiden Seitenwandabschnitten fortsetzt, eine Karkasse (4), die aus einer oder mehreren Karkassenschichten besteht, die sich kreisringförmig zwischen dem Paar von Wulstabschnitten erstrecken und diese Abschnitte verstärken, und ein Paar von Seitenverstärkungsgummilagen (5), die jeweils an einer Innenseite der Karkasse in dem Seitenwandabschnitt angeordnet sind, umfasst, wobei die Karkassenschicht geformt ist durch das Abdecken von Verstärkungskords mit einem Überzugsgummi, und eine Gummizusammensetzung, die eine Verlustziffer (tan δ) bei 25°C und einer 1%-Dehnung von nicht mehr als 0,12 hat, auf den Überzugsgummi aufgebracht ist.

2. Luftreifen nach Anspruch 1, wobei die auf den Überzugsgummi aufgebrachte Gummizusammensetzung einen dynamischen Elastizitätsmodul (E') bei 25°C und einer 1%-Dehnung von nicht weniger als 8,0 MPa hat.

3. Luftreifen nach Anspruch 1 oder 2, wobei eine Gummizusammensetzung, die eine Verlustziffer (tan δ) bei 25°C und einer 1%-Dehnung von nicht mehr als 0,15 hat, auf den Seitenwandabschnitt (2) aufgebracht ist.

4. Luftreifen nach einem der Ansprüche 1 bis 3, wobei die auf den Überzugsgummi aufgebrachte Gummizusammensetzung und wahlweise ebenfalls die auf den Seitenwandabschnitt aufgebrachte Gummizusammensetzung geformt ist durch das Mischen von Ruß, der eine Güte von nicht mehr als FEF hat, in einen Gummibestandteil.

## Revendications

1. Bandage pneumatique, comprenant une paire de parties de talon (1), une paire de parties de flanc (2), une partie de bande de roulement (3) s'étendant vers les deux parties de flanc, une carcasse (4) composée d'une ou de plusieurs nappes de carcasse, s'étendant toroïdalement entre la paire de parties de talon et renforçant ces parties, et une paire de couches de gomme de renforcement des flancs (5), agencées chacune au niveau d'un côté interne de la carcasse dans la partie de flanc, **caractérisé en ce que** la nappe de carcasse est formée en revêtant des câblés de renforcement d'une gomme de revêtement, une composition de gomme, présentant une tangente d'angle de pertes (tan δ) à 25°C, une contrainte de 1 % non supérieure à 0,12 étant appliquée à la gomme de revêtement.

2. Bandage pneumatique selon la revendication 1, dans lequel la composition de caoutchouc appliquée à la gomme de revêtement présente un module d'élasticité dynamique (E') à 25°C et une contrainte de 1 % non inférieure à 8,0 MPa.

3. Bandage pneumatique selon les revendications 1 ou 2, dans lequel une composition de caoutchouc présente une tangente de l'angle de pertes (tan δ) à 25°C, une contrainte de 1 % non supérieure à 0,15 étant appliquée à la partie de flanc (2).

4. Bandage pneumatique selon l'une quelconque des revendications 1 à 3, dans lequel la composition de caoutchouc appliquée à la gomme de revêtement et la composition de caoutchouc optionnellement appliquée à la partie de flanc sont formées en mélangeant du noir de carbone d'une qualité non supérieure à FEF dans un composant de gomme.
